# EUROPEAN PATENT APPLICATION

(11) **EP 1 765 041 A1**
(43) Date of publication of application: **21.03.2007**
(21) Application number: 06019452.9
(22) Date of filing: 18.09.2006
(51) Int. Cl.: H05B 37/02

(54) **Modular device for voltage and current flow stabilization and adjustment to be used in public lighting columns**

(30) Priority: 16.09.2005 IT MC20050095
(71) Applicant: Gitronica S.p.A, 62010 Montelupone (IT)
(72) Inventor: Andreucci, Alessio, 62010 Appignano (MC) (IT)
(74) Representative: Baldi, Claudio

(57) **Abstract**

The present invention relates to a device for voltage and current flow stabilization and adjustment (including from remote) to be used in public lighting columns, characterised in that it is composed of one or more toroidal transformers connected in parallel and one logic control board contained in corresponding enclosures suitably dimensioned to be inserted through the slots with standard shape and dimensions provided in public lighting columns.

## Description

The present patent application relates to a modular device for voltage and current flow stabilization and adjustment to be used in public lighting columns.

As it is known, energy saving has become an important issue in the last few years.

To that end, specific initiatives have been developed, also at public level, in order to control urban and suburban lighting installations.

The most significant measures consist in the use of high-efficiency energy saving light sources, high-efficiency components and centralized flow stabilization and adjustment devices.

In particular, centralized flow stabilization and adjustment devices are used along a row of lighting columns to send lower or higher wattage to the line according to time bands (usually after midnight or in case of light traffic), since a small reduction of flow can result in large saving, while maintaining service at acceptable standards.

Thanks to these devices, the light sources of the row of luminaires should have a more powerful emission in peak hours (with heavy traffic) and a less powerful emission in less important hours (for example, from midnight to five a.m.).

Nevertheless, practically speaking, these centralized flow adjustment devices have not proved satisfactory, mainly due to the physiological voltage drop that occurs gradually from the first to the last luminaire in the row (especially in the case of a long row), it being impossible to guarantee the same luminous intensity level to all light sources in the row.

Another limitation to this technology is that centralization of flow adjustment prevents the individual control of each single luminaire in the row. However, individual control is an important function because the luminaires in the row may have different emission levels according to their specific position.

An attempt to overcome the aforementioned limitations of centralized flow adjustment devices has been made, using a specific-control approach (i.e. "column by column") for the individual columns of the public lighting installation.

For the practical implementation of this inventive idea, a specific inductive transformer has been installed on each column in the row, with the possibility to control the transformers in the same row from a remote centralized electronic station.

The inputs sent from the centralized station to each transformer ensure that the light sources in the row can have the most suitable intensity level according to specific seasonal needs, different night and day times, and different locations of the lighting columns.

Nevertheless, this advanced technology is not free from disadvantages, the first one being the considerable volume of the traditional inductive transformer installed on the lighting column, preferably in the proximity of the light source.

Moreover, the presence of such a device is not aesthetically acceptable, especially in the case of lighting columns installed in historic centres protected by strict regulations.

Moreover, being installed in external position on each lighting column, transformers are subjected to bad weather conditions, accidental shocks and vandalism acts, and are placed in an awkward position for maintenance operations.

Additionally, it has been demonstrated that this "column-by-column" control system is not perfectly efficient, mainly due to the poor reliability of the electronic control system, which suffers frequent blocks, failures and interferences.

Starting from the aforementioned critical considerations, a new technology has been devised to provide "column-by-column" control of a row of lluminaires used for public lighting (with excellent energy saving) free from all the disadvantages of the prior technology based on the use of inductive transformers.

The specific purposes of the present invention have been achieved by means of a new device that is basically composed of two elements that are electrically connected and physically separated and contained inside corresponding plastic enclosures with compact dimensions that allow their insertion through the standard slots that are normally provided on each lighting column.

The first element is a toroidal transformer that can have a modular structure; and the second element is a microcontrol logic board with power board and relay switching used to control the transformer.

The logic board of the device of the invention has a predefined programming, with parameters that can be modified from remote by means of the GSM network, using a centralized station that sends the necessary inputs for the operation of the corresponding light source.

Evidently, the remote centralized station sends specifics instructions to each luminaires in the row.

The use of a toroidal transformer, in modular version if necessary, allows to miniaturize the device, with the possibility to insert and hide it into the standard slot of public lighting columns.

It is clear that the device of the invention is not an encumbrance on the lighting column and has no negative effect on aesthetics.

The fact that the device is housed inside the lighting column ensures total protection against accidental shocks or vandalism acts, and also bad weather conditions.

As mentioned above, the additional advantage of the present invention consists in the fact that, in addition to the traditional logic board, the device of the invention can be provided with multiple "transformer-units" connected in parallel and conveniently housed in the same lighting column.

In such a way the installer of the device of the invention can select the number of "transformer-units" to be installed in each column according to the power of the light source.

Additional advantages are the use of the logic microcontrol board with power board and relay switching, in combination with the toroidal transformer.

In fact, the latter can control the transformer (and light source with it) according to a wide range of parameters, as regards switching on/off time, voltage and current adjustment according to time bands and service levels.

The operation modes of the light source are fine-tuned by suitably programming the board. In fact, the voltage and current of each light source (and, consequently, its luminous intensity) can be adjusted according to the lighting requirements of the same time band in different seasons (i.e.: heavier traffic at 11 p.m. in July than at the same time in January).

"Column-by-column" adjustment is even possible, for example taking into account the different level of darkness in full moon nights.

For purposes of clarity the description of the invention continues with reference to the enclosed drawings, which are intended for purposes of illustration only and not in a limiting sense, whereby:
- figure 1 is a block diagram of a first embodiment of the device of the invention with one transformer;
- figures 2, 3 and 4 are the same as fig. 1, except in that they refer to additional embodiments of the device of the invention, with two, three and four transformers, respectively;
- figure 5 is a diagram of electrical connections with reference to the embodiment of the device shown in fig. 1;
- figure 6 is a block diagram of a line composed of luminaires equipped with the device of the invention;

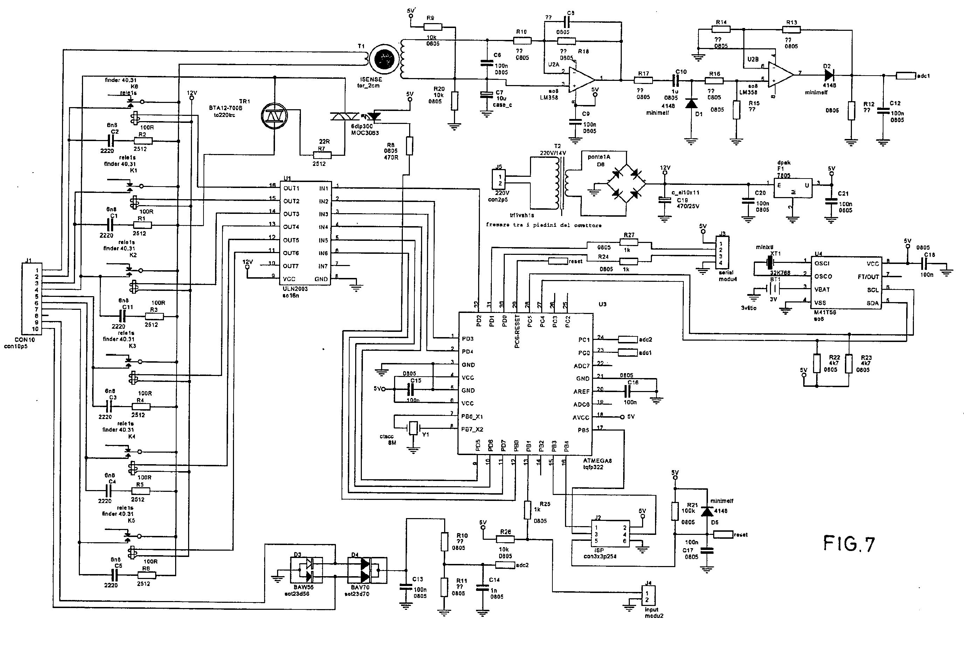

- figure 7 shows the circuit of the logic board used in the device of the invention.

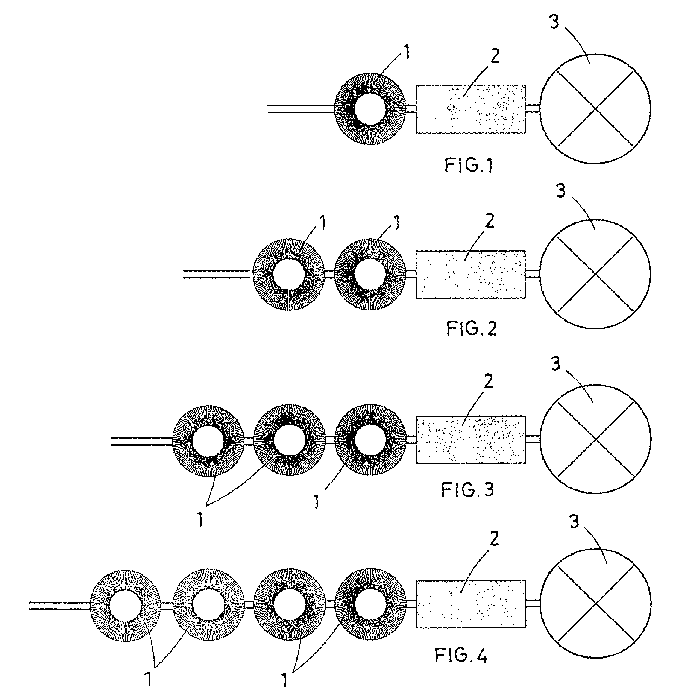

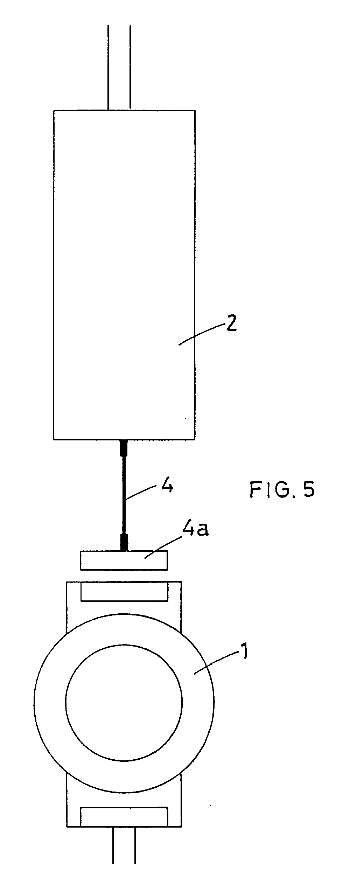

With reference to figures 1 and 5, the device of the invention is composed of a toroidal transformer (1) and a corresponding logic control board (2) contained in plastic enclosures suitable to be inserted and hidden in the traditional slots provided in all public lighting columns and duly fixed inside their internal cavities (preferably by means of ordinary pressure expanding screws).

Evidently, each device is used for the light source (3) of an ordinary luminaire (L) for urban or suburban lighting.

In particular, the toroidal transformer (1) is a modular unit, with the possibility to connect it in parallel with other identical units according to the specific power of the light source fitted on the lighting column.

Figures 2, 3 and 4 refer to three additional solutions of the device of the invention (according to the power of each light source), which provide for the use of two, three and four toroidal transformers, in combination with the logic board (2).

As shown in Fig. 5, the electrical connection between the logic board (2) and the transformer (1) is made by means of flexible cables (4) with fast-coupling connectors (4) that cooperate with corresponding connectors situated outside the plastic enclosures that contain both the logic board (2) and the transformer (1).

Similar modes are provided for parallel connection between multiple "transformer-units" (2) and for electrical connection between the mains system (4) and the logic board (1).

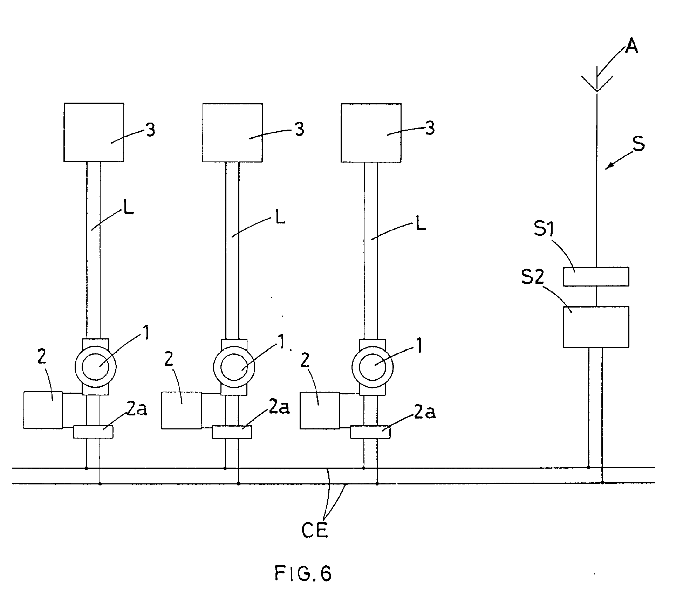

Figure 6 shows how the remote station is used to control each row of luminaries (L) equipped with the new device of the invention according to a "column-by-column" approach.

The remote station sends the activation commands by means of the GSM telephone network to an operating station (S) situated in the proximity of each row of luminaires (L) and connected to it by means of the electrical cables (CE) used to provide electrical power.

The operating station (S) is equipped with a GSM antenna (A) to receive the commands from the remote station and with a control unit (S1) to manage the same commands.

The operating station (S) is also equipped with an additional electronic unit that comprises a concentrator with management logic and a conveyed-wave transmitting device (S2) used to selectively communicate through the electrical cables (CE) with the logic boards (2) installed in each luminaire (L) and provided with suitable conveyed-wave receiving devices (2a).

By means of the operating station (S) used for each row of luminaires (L), the remote station can execute the specific commands sent over the GSM network to each lighting column.

In order to better explain the operation of the device of the invention, it can be said that the device is a sort of programmable timer controlled by a microprocessor provided with different control modes of the relays used to switch the primary circuit of a transformer and consequently reduce its voltage on the secondary circuit.

Such a reduction occurs at night and causes a lower current absorption, due to the lower voltage of the load (a light source in this case), with consequent lower electrical consumption.

The switching of the primary circuit of the transformer is obtained with a relay, except for the start, which is obtained first with a triac switch that shortly anticipates the relay activation, in order to avoid sparkles and extend the relay life, as well as to considerably improve the reliability of the device.

The device is provided with a calendar function for optimized use, with different settings for different seasons in order to ensure versatility according to specific needs.

The incoming voltage is constantly monitored and automatic switching occurs to bring back the outgoing voltage to normal values, if the programmable threshold value is exceeded; this sort of stabilization is advantageous for the life of the light source.

The microprocessor also controls load absorption: if absorption exceeds the parameter programmed in the switching board, the mechanism is positioned in such a way as to open the circuit and interrupt power, thus consequently switching off the light source to identify the anomaly.

In the version that controls secondary power supply, the microprocessor switches the current input according to the availability of the secondary source.

If secondary power supply is available, the input of the dedicated network is enabled. If secondary power supply is not sufficient, the input from the public lighting network is enabled.

An additional version of the device can manage secondary power supply other than the mains power, such as, for instance, power from a photovoltaic panel.

## Claims

1. Device for voltage and current flow stabilization and adjustment to be used in public lighting columns, **characterised in that** it is composed of one or more toroidal transformers (1) connected in parallel and one logic management board (2) contained inside corresponding enclosures suitably dimensioned to be inserted through the slots with standard shape and dimensions provided in public lighting columns.

2. The device of claim 1, **characterised in that** the one or more transformers (1) and the logic board (2) are electrically interconnected by means of suitable flexible cables (4) with fast-coupling connectors (4a).

3. The device of the first or both claims, **characterised in that** the logic board (2) is provided with a conveyed-wave receiving device (2a) used to receive the commands sent through the electrical cable (CE) from a conveyed-wave transmitting device (S2) installed in a operating station (S) used for a row of luminaires (L) for public lighting.
